# EUROPEAN PATENT APPLICATION

(11) **EP 4 790 118 A1**
(43) Date of publication of application: **12.08.2026**
(21) Application number: 25156272.4
(22) Date of filing: 06.02.2025
(51) Int. Cl.: C09K 11/88

(54) **PHOSPHOR MATERIALS**

(71) Applicant: Universiteit Utrecht Holding B.V., 3584 CS Utrecht (NL)
(72) Inventor: MEIJERINK, Andries, 3584 CS Utrecht (NL)
(74) Representative: Hoyng Rokh Monegier B.V.

(57) **Abstract**

The invention relates to a phosphor material with the general formula (RE₁₋ₐMₐ)₂O₂(SₓSe_{y}Te_{1-x-y}), wherein: RE is one or more rare earth elements, preferably one or more selected from the group consisting of yttrium, lanthanum, gadolinium and lutetium, and M is one or more optically active ions, preferably selected from the group consisting of terbium, europium, samarium, praseodymium, holmium and erbium, wherein 0<a<1; 0≤x<1, 0≤y<1, and 0<x+y≤1, preferably wherein the phosphor material is in the form of particles having a diameter of less than about 100 µm, and more than about 100 nm. The invention further relates to phosphor components comprising the phosphor material of the invention, and methods for making such. The invention further relates to light emitting devices and lighting systems comprising the phosphor material or the phosphor component of the invention.

## Description

### FIELD OF THE INVENTION

The invention relates to phosphor materials for lighting applications.

### BACKGROUND OF THE INVENTION

Luminescent down-conversion materials play an important role in solid-state lighting devices for illumination and display applications, among others.

Lanthanide-doped oxysulfides (RE₂O₂S, with RE usually being Y, La, Gd) are a very well-known class of down-conversion materials. Especially Eu³⁺-, Pr³⁺- and Tb³⁺-doped oxysulfides are popular materials due to their excellent luminescence properties and very high stability. They found various applications in lighting, older generation displays and scintillators. Y₂O₂S:Eu³⁺, for example, is an efficient red luminescent material that replaced YVO₄:Eu³⁺ as most used red phosphor for cathode ray tubes.

Like other Eu³⁺ doped materials however, these materials cannot be excited in the blue spectral range and are therefore generally not suitable as color converter for blue LEDs. Y₂O₂S:Eu³⁺ has for example an excitation onset at a wavelength of 400 nm (compared to e.g. Y₂O₃:Eu which has an excitation band around 250 nm).

While oxysulfides have been explored exhaustively as down-conversion materials, lanthanide-doped oxyselenides and oxytellurides, are rarely explored. This is surprising, especially since these materials can have charge-transfer absorption bands at longer wavelengths, even up to 500 nm (The Eu3+ charge transfer energy in relation with the bandgap of compounds, P. Dorenbos, J. Lumin., 111, 89-104 (2005)). Shifting the charge-transfer band to such low energies however might induce thermal quenching issues at lower temperatures, which is undesired for LED applications.

There is thus a need for a class of materials that has an absorption band that is in the visible spectrum, yet also does not induce thermal quenching issues at low temperatures.

### SUMMARY OF THE INVENTION

According to the invention, there is provided a phosphor material with the general formula (RE₁₋ₐMₐ)₂O₂(SₓSe_{y}Te_{1-x-y}), wherein:
RE is one or more rare earth elements, preferably one or more selected from the group consisting of yttrium, lanthanum, gadolinium and lutetium, and M is one or more optically active ions, preferably selected from the group consisting of terbium, europium, samarium, praseodymium, holmium and erbium, wherein 0<a<1;
0≤x<1, 0≤y<1, and 0<x+y≤1,
preferably wherein the phosphor material is in the form of particles having a diameter of less than about 100 µm, and more than about 100 nm.

The materials of the invention show desirable emission properties.

By varying the sulfide/selenide/telluride ratio, the excitation band may be tuned to be in a suitable range.

There is further provided a phosphor component comprising the phosphor material of the invention, preferably wherein said phosphor component is selected from the group of single crystals, phosphor ceramics, phosphor-in-glass, phosphor in resin and phosphor in silicone, and/or preferably wherein said phosphor component has a thickness of ≥ 0.1 mm to ≤ 2.0 mm. The phosphor components of the invention harness the desirable properties of the phosphor material and can be used in many different applications.

There is further provided a light emitting device comprising the phosphor material or phosphor component of the invention, preferably further comprising a light-emitting diode or laser diode, more preferably wherein the light-emitting diode or laser diode emits in the UV-A, violet or blue, and/or wherein the light-emitting diode or laser diode has an emission intensity of at least 0.1 W/mm². Preferably the light-emitting diode emits in the wavelength range of 370-470 nm.

There is further provided a lighting system comprising the light emitting device of the invention.

### BRIEF DESCRIPTION OF FIGURES

**Figure 1** shows the photoluminescence excitation spectra for Na-Y₂O₂S:1%Eu (dashes) and Na-Y₂O₂S_{0.5}Se_{0.5}:1%Eu (solid) powders. The excitation spectrum was recorded by monitoring the 625 nm emission peak.
**Figure 2** shows the photoluminescence emission and excitation spectra for Gd₂O₂S:1% Eu (dashed) and Gd₂O₂S_{0.5}Se_{0.5}:1% Eu (solid) powders. The excitation wavelength was 350 nm for the emission spectrum. The excitation spectrum was recorded by monitoring the 625 nm emission peak.
**Figure 3** shows the X-ray diffraction (XRD) patterns for Gd₂O₂S powder. A standard reference of Gd₂O₂S is included at the bottom.
**Figure 4** shows the X-ray diffraction (XRD) patterns for Gd₂O₂S_{0.5}Se_{0.5} powder. A standard reference of Gd₂O₂S is included at the bottom.

### DETAILED DESCRIPTION

There is provided a phosphor material with the general formula (RE₁₋ₐMₐ)₂O₂(SₓSe_{y}Te_{1-x-y}), wherein 0<a<1; 0≤x<1, 0≤y<1, and 0<x+y≤1.

The term "phosphor" according to the present invention refers to or encompasses in particular a material which upon suitable excitation, preferably in the blue, violet, UV-A or UV-B range (i.e., in particular 370-470 nm), emits light, in particular within a wavelength range of 400 - 2500 nm (visible and infrared spectrum).

RE is one or more rare earth elements. Rare earth elements are defined as any of the group comprising the lanthanide series, scandium, and yttrium. Preferably, RE comprises one or more selected from the group consisting of yttrium, lanthanum, gadolinium and lutetium.

M is one or more optically active ions. An optically active ion is defined herein as any ion that when suitably excited, emits a photon. Preferably, M is selected from the group consisting of terbium, europium, samarium, praseodymium, holmium and erbium.

M is doped into the phosphor material, replacing the RE ions in the crystal lattice, such that 0<a<1.

Preferably, M comprises europium. Preferably, when Eu³⁺ is used, the Eu³⁺ doping concentration is <30%. Doping concentration herein is defined in at% based on the total RE+M concentration.

If Sm³⁺ is used, the Sm³⁺ doping concentration is preferably <5%.

Higher doping concentrations can cause concentration quenching, resulting in lower quantum yield.

The phosphor material comprises at least two of sulphur, selenium and tellurium, such that of SₓSe_{y}Te_{1-x-y}, 0≤x<1, 0≤y<1, and 0<x+y≤1. Preferably 0≤y<0.5, and/or 0.5<x+y≤1. It has been found that at Te and Se inclusion above 50%, thermal quenching of the emission increases.

The phosphor material is in the form of particles having a diameter of less than about 100 µm. Preferably, the phosphor material is in the form of particles having a diameter of more than about 100 nm.

Preferably, the material has an absorption band extending into the violet blue spectral region in the range of 370-470 nm for excitation. Thus, the material is preferably excitable when irradiated with light having a wavelength of 370 - 470 nm. The absorption band may be shifted by tuning the S:Se:Te ratios. In particular, an increased amount of selenium or tellurium can shift the absorption band towards longer wavelengths.

The phosphor material may be prepared using any method known in the art. Exemplary methods include solid-state synthesis methods, such as microwave-assisted solid-state synthesis and high-temperature solid-state synthesis, and wet synthesis methods such as solvothermal synthesis and precipitation methods, or decomposition methods. Examples of these methods are disclosed by:
- Microwave-assisted solid-state synthesis: Miranda de Carvalho et al., J. Mater. Chem. C, 2018, 6, 8897-8905, doi : 10.1039/C8TC01826J,
- High-temperature solid state synthesis: Chou et al, Solid State Communications, 136, 4, 2005, 205-209, doi: 10.1016/j.ssc.2005.07.032,
- Solvothermal synthesis: Larquet et al., Chem. Mater. 2019, 31, 14, 5014-5023, doi: 10.1021/acs.chemmater.9b00450,
- Precipitation: Gu et al., J. Am. Chem. Soc. 2013, 135, 22, 8363-8371, doi: 10.1021/ja4028583,
- Decomposition: Guo et al., Materials Letters 2008, 62, 4-5, 600-602, doi: 10.1016/j.matlet.2007.06.016.

Thus, the invention is further directed to a method for the preparation of the phosphor material according to the invention, preferably wherein the method includes one of: microwave-assisted solid-state synthesis, high-temperature solid-state synthesis, solvothermal synthesis, precipitation, and decomposition.

There is further provided a phosphor component comprising the phosphor material of the invention, and optionally a matrix. A phosphor component can be integrated into an LED chip to convert the light emitted by the LED into a different wavelength. The phosphor component can be made or provided using any method or form known in the art for use in LED applications. Preferably, the phosphor component is selected from the group comprising single crystals, phosphor ceramics, phosphor-in-glass, resin phosphors, polycrystalline phosphors, thin or thick films, and silicone phosphors.

Preferably, the phosphor component has a quantum yield of at least 60% at room temperature. More preferably, the quantum yield of the phosphor component is more than 70%, even more preferably more than 80%. The quantum yield of the phosphor ceramic is measured for a ceramic sample of 0.2 mm thickness, irradiated with light at the phosphor's maximum excitation wavelength in the violet or blue (370-470 nm) at 0.1 W/mm².

In a preferred embodiment, the phosphor component is a single crystal. The single crystal may be prepared using known methods, such as via the Czochralski method, Bridgman method, floating zone growth, melt or flux growth methods.

In a preferred embodiment, the phosphor component is a phosphor ceramic. The term "phosphor ceramic" according to the present invention in particular refers to a ceramic which essentially consists of light emitting materials.

The term "ceramic" according to the present invention refers to and/or encompasses in particular a compact crystalline or polycrystalline material which includes a controlled amount of pores or is non-porous.

The term "polycrystalline material" according to the present invention refers to and/or encompasses in particular a material having a bulk density of greater than 90 percent of the main component, consisting of more than 80 percent of individual crystal domains, wherein the crystal domains have a diameter of 0.01 - 150 µm and a different crystallographic orientation. The individual crystal domains may be bonded to each other or diluted via an amorphous or glassy material or by additional crystalline phases.

Phosphor ceramics can transfer heat effectively, which avoids thermal quenching. This means that the photoluminescence quantum yield (PLQY) can remain high at high irradiation intensities. For example, the quantum yield for the maximum emission excitation wavelength at 1 W/mm² may be at least 70%, preferably at least 80%, more preferably at least 90%, of the quantum yield at 0.1 W/mm².

Preferably, the phosphor ceramic has a thickness of ≥ 0.1 mm to ≤ 2.0 mm. Thickness is defined as the shortest distance through the phosphor ceramic. These dimensions are suitable for use in light emitting devices, as this is commonly the thickness needed to achieve a desired fraction of wavelength conversion. The phosphor ceramic shows good optical properties within these dimensions. In an embodiment, the phosphor ceramic is in the shape of a plate having a diameter to thickness ratio of more than 5:1.

Preferably, the phosphor ceramic has a volume density larger than 90 percent of the theoretical maximum density. The volume density is measured using an electronic densimeter (MD-300s) supplied with an Alfa Mirage balance at room temperature by using the principle of Archimedes and water as buoyancy liquid. A high density is desirable for thermal conductivity, and for the strength of the ceramic.

The phosphor ceramic may further comprise any optical ceramic additive known in the art. Preferably, the additive is at least one selected from the group of scattering aids, thermal conductivity enhancers, and fluxes. More preferably, said additive is selected from the group consisting of alumina, silica or magnesia. These additives may have high thermal conductivity and/or assist in densification, and thus may enhance the thermal conductivity of the entire ceramic. A high thermal conductivity gives cooler ceramics at the operating conditions of the devices, which lead to better conversion efficiencies. Furthermore, they may aid as a flux in ceramic sintering.

Preferably, the phosphor ceramic is a polycrystalline material consisting of more than 80 percent by weight of single crystal domains having a diameter of less than about 150 µm, and more than about 10 nm.

There is further provided a method for producing a phosphor ceramic, comprising the steps of:
(a) providing a phosphor material according to the invention,
(b) forming it into a shape; and
(c) sintering the formed shape.

The method allows to prepare the phosphor ceramic phosphor component of the invention.

Step (a) comprises providing a (material comprising the) phosphor material according to the invention. Preferably, the material of step a. is in the form of particles having a diameter of less than about 100 µm and more than about 10 nm. Such particles are easy to source and allow to obtain the desired grain size and opacity. Particles of this size may also be prepared by first agglomerating the phosphor material of the invention with a binder to achieve agglomerated powder having a D50 of about 100 nm to 500 µm. At this step, optional additives may also be provided, which are as defined above.

Step (b) comprises forming the material into a shape. Step b. may comprise any known way to form a material into a shape. For example, step b. comprises axial and/or cold isostatic pressing, tape casting, slot die processes and/or thermoplastic processes (e.g. injection molding, hot casting (low-pressure or medium-pressure injection molding), and/or extruding). Preferably step b. is carried out such that the compression process takes place at pressures between > 20 and < 200 MPa.

Step (c) comprises sintering the formed shape. This step allows to form the ceramic from the phosphor material. Preferably, said sintering comprises heating at a temperature of 800 - 1800°C, for 0.5 - 6 hours.

In a preferred embodiment, the phosphor component is a phosphor-in-glass. Phosphor-in-glass is a mixture of a transparent glass and ceramic phosphors. The phosphor material is suspended in the glass.

Phosphor-in-glass may be made according to any procedure known in the art. In general, transparent glass and phosphor material may be provided as powders, and partially fused together at a temperature lower than 900°C. The glass powder melts and forms a matrix around the phosphor material.

The advantage of phosphor-in-glass components is that they are less costly to produce than phosphor ceramics, as the sintering temperature is lower and less phosphor material may be necessary to produce a phosphor component. The phosphor-in-glass component can show good thermal and chemical stability, and has good transparency and scattering characteristics.

In a preferred embodiment, the phosphor component is a resin phosphor. Such phosphor components may be prepared by mixing the phosphor material with an uncured resin slurry, and then curing the resin slurry.

In a preferred embodiment, the phosphor component is a silicone phosphor. Such phosphor components may be prepared by mixing the phosphor material with a silicone prepolymer mix and curing this. The silicone phosphor components may be more flexible, allowing for different applications.

There is further provided a light emitting device comprising a phosphor material according to the invention, or the phosphor component according to the invention.

Preferably the light emitting device further comprises a light-emitting diode or laser diode. Preferably, the light-emitting diode or laser diode emits in the UV-A, violet or blue. Preferably, the light-emitting diode or laser diode has an emission intensity of at least 0.1 W/mm².

Preferably, the light emitting device or phosphor component further comprises another phosphor material. The other phosphor material is preferably capable of emitting light having wavelengths primarily in the range of 400-495 nm and/or capable of emitting light having wavelengths in the range of 495-570 nm and/or capable of emitting light having wavelengths in the range of 570-620 nm.

There is provided a lighting system comprising a light emitting device according to the invention.

Preferably, the lighting system is one or more of the following:
a. office lighting systems
b. household application systems
c. shop lighting systems,
d. home lighting systems,
e. accent lighting systems,
f. spot lighting systems,
g. theatre lighting systems,
h. fibre-optics application systems,
i. projection systems,
j. self-lit display systems,
k. pixelated display systems,
l. segmented display systems,
m. warning sign systems,
n. medial lighting application systems,
o. indicator sign systems, and
p. decorative lighting systems
q. portable systems
r. automotive applications
s. green house lighting systems
t. display backlighting
u. emissive displays
v. microLEDs.

### EXAMPLES

### Comparative Experiment A: Solid state synthesis of Y₂O₂Se

Y₂O₂Se was prepared as disclosed in Tarasenko et al., Y2O2Se as a potential matrix for optical materials: A novel preparation method and optical properties, Materials Today Communications, Volume 21, 2019, 100665, ISSN 2352-4928, https://doi.org/10.1016/j.mtcomm.2019.100665. was followed.

5.00 mmol (1.129 g) of yttrium(III) oxide, 5.00 mmol (0.400 g) of selenium, 2.60 mmol (0.031 g) of carbon and ~0.001 g of iodine (I₂) as a transport agent were loaded into a quartz ampoule with 3.000 g of CsCI as a flux. The ampoule was cooled in liquid nitrogen, evacuated to a residual pressure of 10⁻² Torr and sealed. The ampoule was heated to 950 °C (1223 K) for 5 h in a muffle furnace, kept there for 72 hours, and then the furnace was turned off. Before opening the ampoule, it was cooled in liquid nitrogen. The gas pressure was estimated to be 17.6 atm for a 15 ml ampoule. The product was washed with distilled water to remove CsCI and dried in air. Transparent hexagon-shaped plates were obtained. The yield was quantitative. According to the energy-dispersive X-ray spectroscopy analysis (EDS), the Y:Se ratio was close to 2:1.

### Example 1: Precipitation synthesis of Na-Y₂O₂Se_{0.5}S_{0.5}:1%Eu

Na-Y₂O₂Se_{0.5}S_{0.5}:1%Eu nanoparticles were synthesized via a precipitation method.

Stoichiometric amounts of Eu(acac)s and Y(acet)₃ (combined 0.5 mmol), Na(oleate) (0.5 mmol), S and SeO₂ (combined 0.5 mmol), and oleic acid (2.5 mmol), oleyl amine (17 mmol), and octadecene (20 mmol) were loaded into a three-neck flask (100 mL) on a heater with a magnetic stirrer. The mixture was heated to 120°C under vacuum for 30 minutes to remove water and other impurities with low boiling points. The solution was then heated to 310°C at a heating rate of 20 °C/min under a N₂ atmosphere. After 30 minutes at 310 °C, the solution was air-cooled to room temperature and nanocrystals were precipitated from the crude solution by addition of ethanol, followed by centrifugation and dispersion in cyclohexane.

### Comparative Experiment B: Precipitation synthesis of Na-Y₂O₂S:1% Eu

Na-Y₂O₂S:1%Eu nanoparticles were synthesized via the same method according to Example 1.

### Photoluminescence spectra of Example 1 and Comparative Experiment B

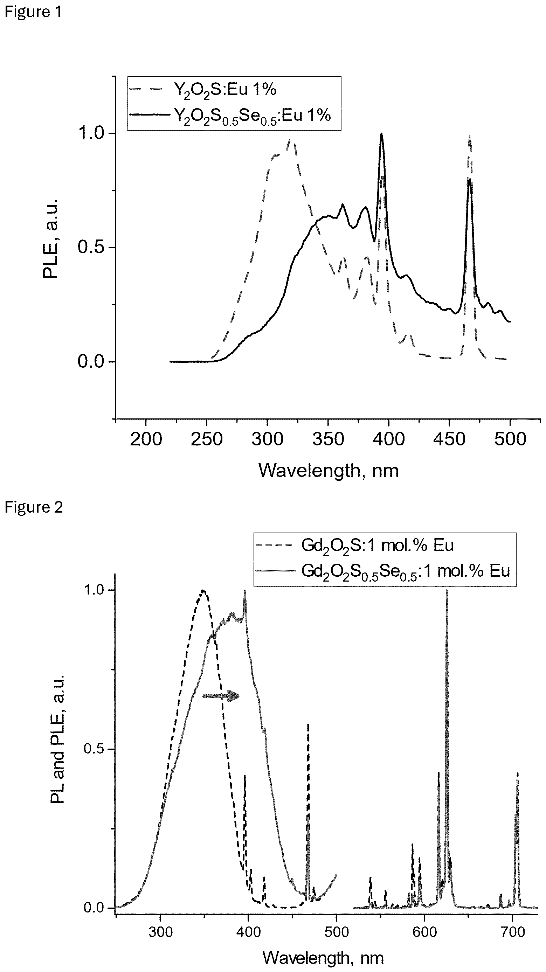

Photoluminescence excitation spectra for Example 1 and Comparative Experiment B were measured. The excitation spectrum was recorded by monitoring 625 nm emission peak, and shown in Figure 1. It can be seen that the broad charge transfer band has shifted to longer wavelengths, i.e. lower energies, when including Selenium.

### Example 2: Microwave synthesis of Gd₂O₂(SeS):1% Eu

Gd₂O₂(SeS):1% Eu particles were synthesized via a microwave-assisted solid-state method. In preparing material precursors, Eu₂O₃, Gd₂O₃, S, SeO₂ and Na₂CO₃ were weighted in a Eu₂O₃:Gd₂O₃:S:SeO₂:Na₂CO₃ molar ratio of 0.01:1:0.55:0.55:0.25. The powder mixture was ground with acetone to aid homogenizing and then left to dry in air. After drying, 0.5 g of the prepared mixture was added to a 2.5 cm³ alumina crucible, and placed inside a bigger 27 cm³ alumina crucible filled with 11 g of granular activated carbon, acting as microwave susceptor. This double crucible was placed inside the cavity of aluminosilicate thermal insulation bricks. The precursors were heated in a domestic microwave oven (Daewoo KOR1N4A, 1 kWh) using a microwave program of 25 min, in which the first 10 min the power was set to 90%, and to 80% for the final 15 min. The obtained material was ground with acetone and adding 1:1 mixture of sulfur and SeO₂ powder (10% in mass) to be reheated in the microwave oven using the same power/time program. After the second microwave heating treatment, the resultant Gd₂O₂(SeS):1 % Eu powder was ground (without acetone) to obtain the final materials.

### Comparative Experiment C: Microwave synthesis of Gd₂O₂S:1%Eu

Gd₂O₂S:1%Eu particles were synthesized via the microwave-assisted solid-state method according to Example 2. Instead of S and Se, only S was used.

### Photoluminescence spectra and XRD patterns of Example 2 and Comparative Experiment C

Photoluminescence emission spectra for Example 2 and Comparative Experiment C were measured at an excitation wavelength of 350 nm, and shown in Figure 2. It can be seen that the emission peaks do not shift.

Photoluminescence excitation spectra for Example 2 and Comparative Experiment C were measured at emission wavelength of 625 nm, and shown in Figure 2. It can be seen that the broad charge transfer band has shifted to longer wavelengths, i.e. lower energies, when including Selenium.

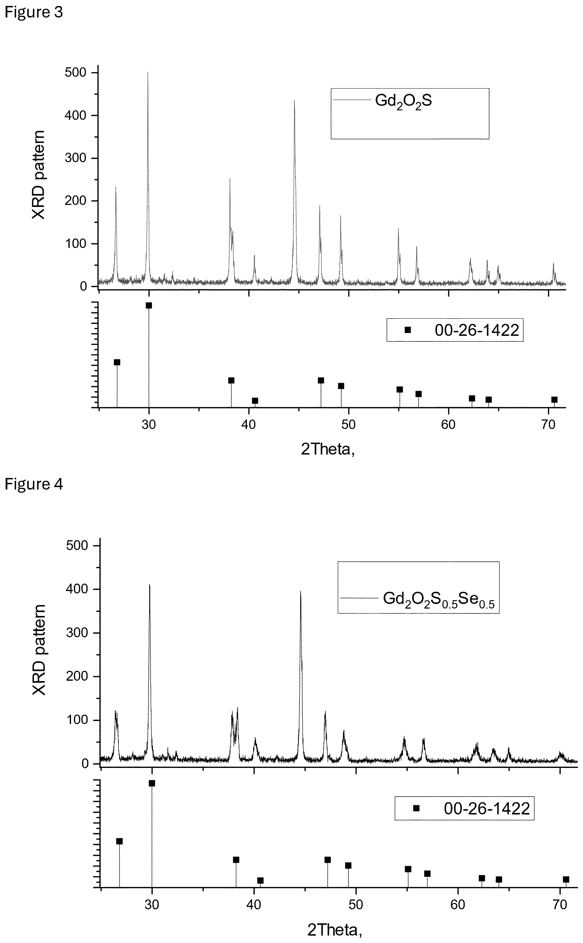

XRD patterns were measured for Comparative Experiment C and Example 2 (Figures 3 and 4). It can be seen that both materials are crystalline and in a good agreement with the standard XRD pattern of Gd₂O₂S. The XRD peaks of Gd₂O₂S_{0.5}Se_{0.5} are shifted to lower angles due to lattice expansion.

## Claims

1. A phosphor material with the general formula (RE₁₋ₐMₐ)₂O₂(SₓSe_{y}Te_{1-x-y}), wherein:
RE is one or more rare earth elements, preferably one or more selected from the group consisting of yttrium, lanthanum, gadolinium and lutetium, and M is one or
more optically active ions, preferably selected from the group consisting of terbium, europium, samarium, praseodymium, holmium and erbium, wherein 0<a<1;
0≤x<1, 0≤y<1, and 0<x+y≤1,
preferably wherein the phosphor material is in the form of particles having a diameter of less than about 100 µm, and more than about 100 nm.

2. The phosphor material of claim 1, wherein M is Eu³⁺.

3. The phosphor material of claim 2, wherein the Eu³⁺ doping concentration is <30%.

4. The phosphor material of claim 1, wherein the material is excitable when irradiated with light having a wavelength of 370 - 470 nm.

5. The phosphor material of any of the preceding claims, wherein 0≤y<0.5, and/or 0.5<x+y≤1.

6. A phosphor component comprising the phosphor material of any one of claims 1-5, preferably wherein said phosphor component is selected from the group of single crystals, phosphor ceramics, phosphor-in-glass, phosphor in resin and phosphor in silicone, and/or preferably wherein said phosphor component has a thickness of ≥ 0.1 mm to ≤ 2.0 mm.

7. The phosphor component of claim 6, which:
- is a translucent component having an inline transmittance %T for the emission wavelength of the LED for a thickness of 0.2 mm of less than about 50%, preferably about 0 to about 20%;
- has a quantum yield at room temperature of at least 60%, preferably more than 70%, more preferably more than 80%, as measured for a sample of 0.2 mm thickness, irradiated with 370-470 nm light at 1 W/cm² at the wavelength of maximum absorption.

8. The phosphor component of any of claims 6-7, which is a phosphor ceramic, and preferably:
- is a polycrystalline material consisting of more than 80 percent by weight of single crystal domains, with each domain having a diameter of less than about 150 µm, and more than about 10 nm,
- has a volume density larger than 90 percent of the theoretical maximum density; and/or
- further comprises one or more additives selected from scattering aids, thermal conductivity enhancers, and fluxes, preferably wherein said additive is selected from alumina, silica or magnesia.

9. The phosphor component of any of claims 6-7, which is a phosphor-in-glass component.

10. A method for producing a phosphor component according to claim 8, comprising the steps of:
(a) providing a phosphor material according to any one of claims 1-5 and optionally one or more additives,
(b) forming it into a shape; and
(c) sintering the formed shape,
preferably wherein the material of step a. is in the form of particles having a diameter of less than about 100 µm and more than about 100 nm.

11. A light emitting device comprising a phosphor material according to any one of claims 1-5, or comprising the phosphor component according to any one of claims 6-9,
preferably further comprising a light-emitting diode or laser diode,
more preferably wherein the light-emitting diode or laser diode emits in the UV-A, violet or blue, and/or wherein the light-emitting diode or laser diode has an emission intensity of at least 0.1 W/mm².

12. The light emitting device according to claim 11, or the phosphor component according to claims 6-8, further comprising another phosphor material, preferably capable of emitting light having wavelengths primarily in the range of 450-495 nm and/or another material capable of emitting light having wavelengths in the range of 495-570 nm and/or another material capable of emitting light having wavelengths in the range of 570-620 nm.

13. A lighting system comprising a light emitting device according to any one of claims 11-12.

14. A lighting system according to claim 13, wherein the lighting system is one or more of the following:
a. office lighting systems
b. household application systems
c. shop lighting systems,
d. home lighting systems,
e. accent lighting systems,
f. spot lighting systems,
g. theatre lighting systems,
h. fibre-optics application systems,
i. projection systems,
j. self-lit display systems,
k. pixelated display systems,
l. segmented display systems,
m. warning sign systems,
n. medial lighting application systems,
o. indicator sign systems, and
p. decorative lighting systems
q. portable systems
r. automotive applications
s. green house lighting systems
t. display backlighting
u. emissive displays
v. microLEDs.
